# EUROPEAN PATENT APPLICATION

(11) **EP 4 239 021 A1**
(43) Date of publication of application: **06.09.2023**
(21) Application number: 21886361.1
(22) Date of filing: 29.10.2021
(51) Int. Cl.: C08K 5/5419, C08K 5/56, C08L 83/05, C08L 83/07, C08K 3/11

(54) **CURABLE FLUOROSILICONE COMPOSITION**

(30) Priority: 29.10.2020 JP 2020181635
(71) Applicant: Dow Toray Co., Ltd., Tokyo 140-8617 (JP)
(72) Inventor: FUKUI, Hiroshi, Ichihara-shi, Chiba 299-0108 (JP)
(74) Representative: Murgitroyd & Company
(86) International application number: PCT/JP2021/039932
(87) International publication number: WO 2022/092244

(57) **Abstract**

A curable fluorosilicone composition of the present invention comprises: (A) an organopolysiloxane having at least two alkenyl groups and at least one fluoroalkyl group having 3 to 12 carbon atoms in a molecule; (B) an organopolysiloxane having at least two silicon atom-bonded hydrogen atoms and at least one fluoroalkyl group having 3 to 12 carbon atoms in a molecule; (C) a platinum group metal-based catalyst for hydrosilylation reaction; and (D) a silylated acetylene inhibitor, in which the platinum group metals in component (C) relative to the present composition are 0.1 to 100 ppm, and the molar ratio of the aliphatic unsaturated bonds in component (D) relative to the platinum group metals in component (C) is 100 to 2,000. The composition has favorable curability and a sufficiently long pot life at room temperature.

## Description

### TECHNICAL FIELD

The present invention relates to a curable fluorosilicone composition.

### BACKGROUND ART

Curable fluorosilicone compositions that cure by an addition reaction in the presence of a platinum group metal based catalyst for hydrosilylation reaction are used as sealing materials for electrical and electronic components because after curing, silicone cured product is formed with superior cold resistance and solvent resistance (see Patent Documents 1 and 2). These curable fluorosilicone compositions have a slow curing speed, and when a satisfactory curing speed is attempted, the pot life at room temperature is dramatically shortened.

Therefore, Patent Document 3 proposes a method of controlling the cure initiation time and cure time of a curable fluorosilicone composition by blending a crosslinking agent mixture which includes an alkylhydrogensiloxane containing a fluoroalkyl group.

Meanwhile, Patent Document 4 discloses that in a curable silicone composition containing a platinum group metal-based catalyst for hydrosilylation reaction, a silylated acetylene inhibitor is blended in 0.001 to 1 parts by weight based on the total weight of the composition. Patent Document 4 discloses the use of a silylated acetylene inhibitor to reduce yellowing of the resulting silicone cured product, but there is no description of adjusting the molar ratio of the aliphatic unsaturated bond in the silylated acetylene inhibitor to the platinum group metal in the catalyst to ensure the pot life of the composition at room temperature.

### Prior Art Documents

### Patent Documents

Patent Document 1: Japanese Patent Application Publication No. H05-070693
Patent Document 2: Japanese Patent Application Publication No. H07-070444
Patent Document 3: Japanese Patent Application Publication No. H10-081825
Patent Document 4: Japanese Patent Application Publication (Translation of PCT Application) No. 2009-523856

### BRIEF SUMMARY OF THE INVENTION

### Technical Problem

An object of the present invention is to provide a curable fluorosilicone composition having favorable curability and a sufficient pot life at room temperature.

### Solution to Problem

A curable fluorosilicone composition of the present invention comprises:
(A) 100 parts by mass of an organopolysiloxane having at least two alkenyl groups and at least one fluoroalkyl group having 3 to 12 carbon atoms in a molecule;
(B) an organopolysiloxane having at least two silicon atom-bonded hydrogen atoms and at least one fluoroalkyl group having 3 to 12 carbon atoms in a molecule, in an amount such that the silicon atom-bonded hydrogen atoms in this component is 0.1 to 10 moles relative to one mole of a total of aliphatic unsaturated bonds in the present composition;
(C) a platinum group metal-based catalyst for hydrosilylation reaction; and
(D) a silylated acetylene inhibitor,
wherein the amount of platinum group metals in component (C) relative to the present composition is in a range of 0.1 to 100 ppm, in terms of mass units, and the molar ratio of the aliphatic unsaturated bonds in component (D) relative to the platinum group metals in component (C) is 10 to 2,000.

In various embodiments, component (A) includes a straight-chain organopolysiloxane having an alkenyl group bonded only to silicon atoms capping both molecular chain terminals.

In various embodiments, component (B) includes an organopolysiloxane having hydrogen atoms bonded only to silicon atoms capping both molecular chain terminals, and in particular, it is preferable that the organopolysiloxane is a mixture of a straight-chain organopolysiloxane having hydrogen atoms bonded only to silicon atoms capping both molecular chain terminals and a branched-chain organopolysiloxane having hydrogen atoms bonded only to silicon atoms capping molecular chain terminals.

In various embodiments, component (C) is a platinum compound or a platinum complex.

In various embodiments, component (D) is a silylated acetylene inhibitor represented by the following general formula: 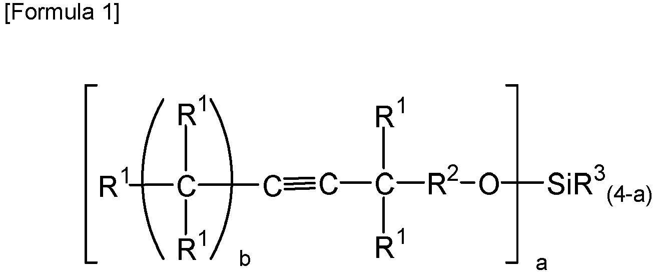
(In the formula, R¹s are the same or different, hydrogen atoms or monovalent hydrocarbon groups, R² is a linking group or an alkylene group, R³ is an alkyl group, an alkenyl group, or an aryl group, "a" is an integer from 1 to 4, and "b" is an integer from 0 to 5);
a silylated acetylene inhibitor represented by the following general formula: 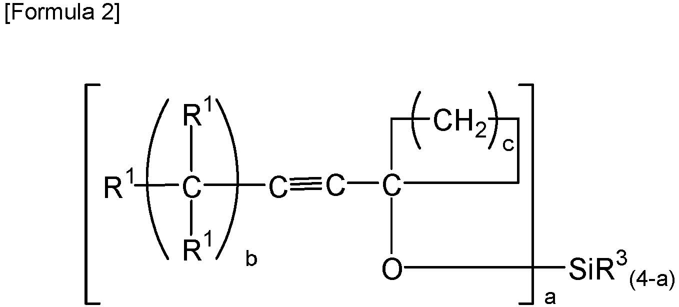
(In the formula, R¹, R³, "a", and "b" are the same as described above, and "c" is an integer from 4 to 6);
or a mixture thereof.

### Effects of Invention

The curable fluorosilicone composition of the present invention is characterized by having favorable curability and a sufficiently pot life at room temperature.

### DETAILED DESCRIPTION OF THE INVENTION

### Definitions

In this specification, "aliphatic unsaturated bond" is a generic term for aliphatic carbon-carbon double bonds and aliphatic carbon-carbon triple bonds.

Also, in this specification, "silylated acetylene inhibitor" refers to an acetylene inhibitor having a silyl group, such as a reaction product in which a hydroxyl group in an acetylene alcohol inhibitor is replaced with a siloxy group as disclosed in U.S. Patent No. 5,449,802 and U.S. Patent No. 5,708,046.

### <Curable fluorosilicone composition>

Component (A) is a base compound of the present composition and is an organopolysiloxane having at least two alkenyl groups and at least one fluoroalkyl group having 3 to 12 carbon atoms in a molecule. Examples of the alkenyl groups in component (A) include: vinyl groups, allyl groups, butenyl groups, pentenyl groups, hexenyl groups, heptenyl groups, octenyl groups, nonenyl groups, decenyl groups, and other alkenyl groups having 2 to 12 carbon atoms. However, vinyl groups and hexenyl groups are preferred. In addition, examples of the fluoroalkyl groups in component (A) include 3,3,3-trifluoro-propyl groups, 4,4,4,3,3-pentafluorobutyl groups, 5,5,5,4,4,3,3-heptafluoropentyl groups, 6,6,6,5,5,4,4,3,3-nonaflorohexyl groups, 7,7,7,6,6,5,5,4,4,3,3-undecafloroheptyl groups, and preferably 3,3,3-trifloropropyl groups. Furthermore, examples of groups bonded to the silicon atoms other than the alkenyl groups and the fluoroalkyl groups in component (A) include, alkyl groups having 1 to 12 carbon atoms such as methyl groups, ethyl groups, propyl groups, butyl groups, pentyl groups, hexyl groups, heptyl groups, and the like; aryl groups having 6 to 12 carbon atoms such as phenyl groups, tolyl groups, xylyl groups, and the like; aralkyl groups having 7 to 12 carbon atoms, such as benzyl groups, phenethyl groups, and the like, but methyl groups or phenyl groups are preferable. Furthermore, a small amount of hydroxyl groups, or methoxy groups, ethoxy groups, or other alkoxy groups may be bonded to the silicon atom in component (A) within a scope that does not impair an object of the present invention.

The molecular structure of component (A) is not limited, and includes, for example, straight-chain, branched-chain, partially branched straight-chain, and resinoid, but is preferably a straight-chain or a partially branched straight-chain. Furthermore, the viscosity of component (A) at 25°C is not limited, but is preferably within a range of 100 to 100,000 mPa·s or within a range of 500 to 50,000 mPa·s. This is because, if the viscosity of component (A) is equal to or above the lower limit of the range described above, the mechanical strength of the resulting fluorosilicone cured product is enhanced; on the other hand, if the viscosity is equal to or below the upper limit of the range described above, the handling workability and filling properties of the present composition are enhanced. The viscosity of component (A) can be measured by a rotational viscometer or a rotational rheometer in accordance with JIS K7117-2:1999 "Plastics-Polymers/resins in the liquid state or as emulsions or dispersions-Determination of viscosity using a rotational viscometer with defined shear rate."

Examples of such component (A) include, copolymers of dimethylsiloxane and methyl(3,3,3-trifluoropropyl)siloxane capped at both molecular chain terminals with dimethylvinylsiloxy groups; copolymers of dimethylsiloxane, methylvinylsiloxane and methyl(3,3,3-trifluoropropyl)siloxane capped at both molecular chain terminals with dimethylvinylsiloxy groups; copolymers of dimethylsiloxane, methylvinylsiloxane and methyl(3,3,3-trifluoropropyl)siloxane capped at both molecular chain terminals with dimethylvinylsiloxy groups; or copolymers of methyl(3,3,3-trifluoropropyl)siloxane and methylvinylsiloxane capped at both molecular chain terminals with trimethylsiloxy groups; or mixtures of two or more thereof, preferably containing a straight-chain organopolysiloxane having alkenyl groups bound only to silicon atoms capping both molecular chain terminals.

Component (B) is a crosslinking agent of the present composition and is an organopolysiloxane having at least two silicon atom-bonded hydrogen atoms and at least one fluoroalkyl group having 3 to 12 carbon atoms in a molecule. In addition, examples of the fluoroalkyl groups in component (B) include 3,3,3-trifluoropropyl groups, 4,4,4,3,3-pentafluorobutyl groups, 5,5,5,4,4,3,3-heptafluoropentyl groups, 6,6,6,5,5,4,4,3,3-nonafluorohexyl groups, 7,7,7,6,6,5,5,4,4,3,3-undecafluoroheptyl groups, and preferably 3,3,3-trifluoropropyl groups. Furthermore, examples of groups bonded to silicon atoms other than the hydrogen atoms and fluoroalkyl groups in component (B) include: alkyl groups having 1 to 12 carbon atoms such as methyl groups, ethyl groups, or propyl groups; and aryl groups having 6 to 12 carbon atoms such as phenyl groups, tolyl groups, or xylyl groups. Methyl groups and phenyl groups are preferred.

The molecular structure of component (B) is not limited, and examples include straight chain structures, branched chain structures, partially branched straight chain structures, cyclic structures, and resinoid structures. The viscosity of component (B) is not limited, but preferably the kinematic viscosity at 25°C is within a range of 1 to 10,000 mm²/s, or 1 to 2,000 mm²/s. This is because, if the viscosity of component (B) is equal to or above the lower limit of the range described above, the mechanical strength of the resulting fluorosilicone cured product is enhanced; on the other hand, if the viscosity is equal to or below the upper limit of the range described above, the handling workability and filling properties of the present composition are enhanced. The viscosity of component (B) can be measured by a viscometer in accordance with JIS K2283:2000 "Crude petroleum and petroleum products-Determination of kinematic viscosity and calculation of viscosity index from kinematic viscosity."

Examples of component (B) include, copolymers of methylhydrogensiloxane and methyl(3,3,3-trifluoropropyl)siloxane capped at both molecular chain terminals with trimethylsiloxy groups; copolymers of dimethylsiloxane, methylhydrogensiloxane and methyl(3,3,3-trifluoropropyl)siloxane capped at both molecular chain terminals with trimethylsiloxy groups; methyl(3,3,3-trifluoropropyl)polysiloxane capped at both molecular chain terminals with dimethylhydrogensiloxy groups; and copolymers of dimethylsiloxane, methylhydrogensiloxane and methyl(3,3,3-trifluoropropyl)siloxane capped at both molecular chain terminals with dimethylhydrogensiloxy groups, preferably including an organopolysiloxane having hydrogen atoms bonded only to silicon atoms capping both molecular chain terminals, and in particular, a mixture of a straight-chain organopolysiloxane having hydrogen atoms bonded only to silicon atoms capping at both molecular chain terminals and a branched-chain organopolysiloxane having hydrogen atoms bonded only to silicon atoms capping molecular chain terminals is preferable.

The amount of component (B) is an amount such that the silicon atom-bonded hydrogen atoms in this component is in a range of 0.1 to 10 moles, preferably in a range of 0.1 to 5 moles, in a range of 0.5 to 5 moles, or in a range of 0.5 to 3 moles, relative to 1 mole of a total of aliphatic unsaturated bonds in the present composition. This is because the present composition is sufficiently cured when the amount of component (B) is equal to or above the lower limit of the range described above, while the heat resistance of the resulting fluorosilicone cured product is enhanced when the amount of component (B) is equal to or below the upper limit of the range described above.

Component (C) is a platinum group metal-based catalyst for hydrosilylation reaction for promoting the curing of the present composition. Examples of component (C) include platinum catalysts, rhodium catalysts, ruthenium catalysts, iridium catalysts, palladium catalysts, and other platinum group metal catalysts. Platinum catalysts are preferred. Examples of the platinum catalysts are platinum chloride, platinum chloride hexahydrate, platinum dichloride, alcoholic solutions of platinum chloride, olefin complexes of platinum chloride, platinum chloride and alkenylsiloxane complexes, diketone complexes of platinum, alkenylsiloxane complexes of platinum, and olefin complexes of platinum. Alkenylsiloxane complexes are preferred. In particular, 1,3-diethynyl-1,1,3,3-tetramethyldisiloxane complexes of platinum and methyl(3,3,3-trifluoropropyl)siloxane oligomer capped at both molecular chain terminals with dimethylvinylsiloxy groups complexes of platinum.

Component (D) is a silylated acetylene inhibitor for adjusting the curability of the present composition. Such a component (D) is disclosed, for example, in U.S. Patent No. 5,449,802 and U.S. Patent No. 5,708,046, and include, for example, 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, 3,5-diethyl-1-hexyn-3-ol, and 1-ethynyl-1-cyclohexanol, wherein the hydroxyl group thereof is substituted with a siloxy gorup.

Such component (D) may include, for example, a silylated acetylene inhibitor represented by the following general formula: 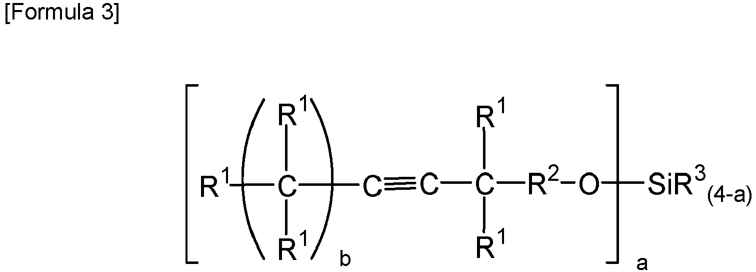
a silylated acetylene inhibitor represented by the following general formula: 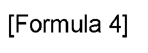 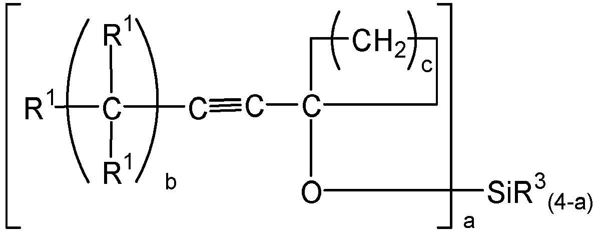
or a mixture thereof.

In the formulas, R¹s are the same or different, hydrogen atoms or monovalent hydrocarbon groups. Examples of the monovalent hydrocarbon groups for R¹ include alkyl groups having 1 to 12 carbon atoms such as methyl groups, ethyl groups, propyl groups, butyl groups, pentyl groups, hexyl groups, and heptyl groups; aryl groups having 6 to 12 carbon atoms such as phenyl groups, tolyl groups, and xylyl groups; aralkyl groups having 7 to 12 carbon atoms such as benzyl groups and phenethyl groups, but methyl groups are preferable.

In the formula, R² is a linking group or an alkylene group. Examples of the alkylene groups for R² include alkylene groups having 1 to 12 carbon atoms such as methylene groups, ethylene groups, propylene groups, butylene groups, pentylene groups, hexylene groups, and heptylene groups. R² is preferably a linking group.

In the formulas, R³ is an alkyl group, an alkenyl group, or an aryl group. Examples of the alkyl groups for R³ are alkyl groups having 1 to 12 carbon atoms, such as methyl groups, ethyl groups, propyl groups, butyl groups, pentyl groups, hexyl groups, and heptyl groups. Examples of the alkenyl groups for R³ include alkenyl groups having 2 to 12 carbon atoms, such as vinyl groups, allyl groups, butenyl groups, pentenyl groups, hexenyl groups, and heptenyl groups. Examples of the aryl groups for R³ are aryl groups having 6 to 12 carbon atoms, such as phenyl groups, tolyl groups, xylyl groups, and the like.

In the formulas, "a" is an integer from 1 to 4, preferably 3 or 4.

In the formulas, "b" is an integer from 0 to 5, preferably 0.

In the formula, "c" is an integer from 4 to 6, preferably 5.

Examples of such component (D) include the following types of silylated acetylene inhibitors.

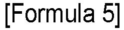

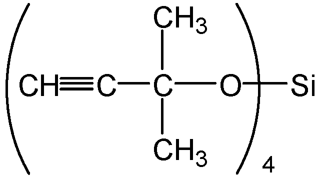

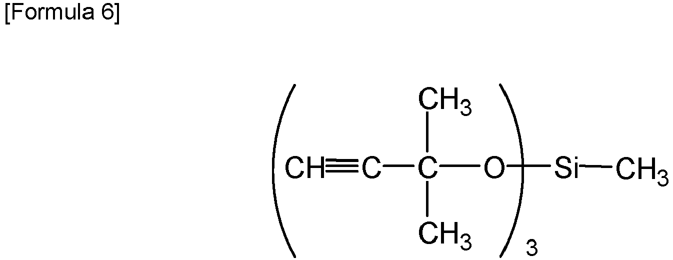

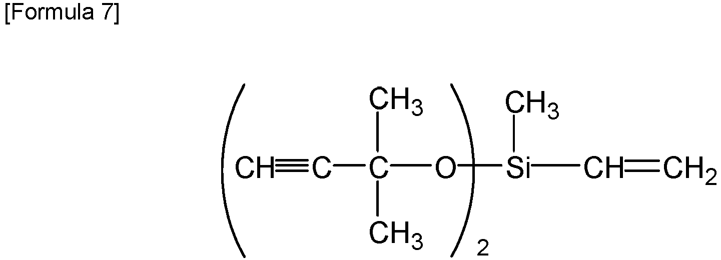

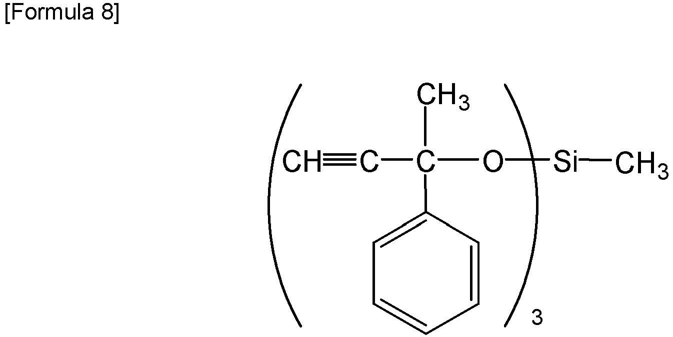

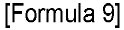

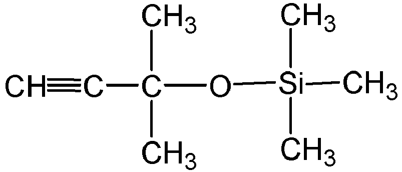

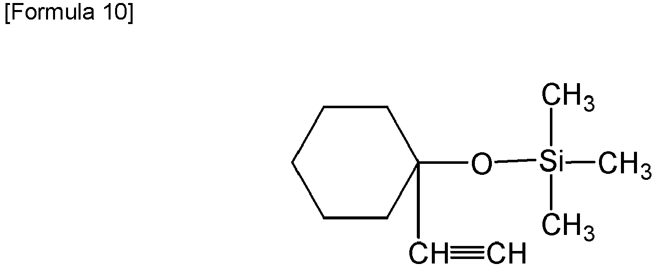

The preparation method of component (D) is well-known, for example, as disclosed in U.S. Patent No. 5,449,802 and U.S. Patent No. 5,708,046, wherein an acetylene alcohol represented by the following general formula: 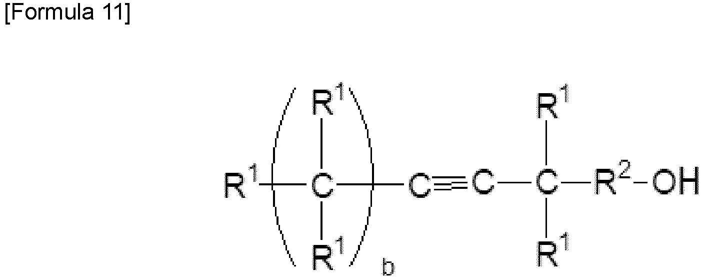
and/or the acetylene alcohol represented by the following general formula: 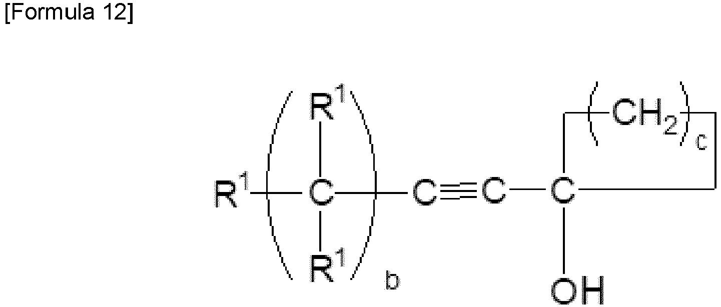
and the chlorosilane represented by the following general formula:

   X_{d}SiR³ (_{4-d})
can be put through a condensation reaction to prepare the component. In the above formula, R¹, R², R³, "b", and "c" are the same as described above. In the above formula, X is a hydrolyzable group, of which examples include alkoxy groups such as methoxy groups, ethoxy groups, or propoxy groups; halogen atoms such as chlorine atoms; or acetoxy groups. In the above formula, "d" is an integer from 1 to 4, preferably 2 or 3.

The amount of component (C) and component (D) contained in the present composition is, relative to the present composition, an amount in which the platinum group metals in component (C) are 0.1 to 100 ppm by mass and the molar ratio of the aliphatic unsaturated bonds in component (D) relative to the platinum group metals in component (C) is 100 to 2,000. Preferably, an amount where the platinum group metals in component (C) is 0.1 to 50 ppm by mass, and the molar ratio of the aliphatic unsaturated bonds in component (D) relative to the platinum group metals in component (C) is 150 to 1,600. This is because, when the amount of the component (C) is equal to or above the lower limit of the range described above, curing of the present composition proceeds sufficiently, while, when the amount is equal to or below the upper limit of the range described above, the resulting fluorosilicone cured product is less likely to be colored. If the amount of component (D) is equal to or above the lower limit of the range described above, the pot life of the present composition at room temperature will be sufficient, and if the amount of component (D) is eqaul to or below the upper limit of the range described above, the curability of the present composition will be good.

The present composition may also contain known inhibitors other than component (D) in order to improve the storage stability of the present composition or to improve the handling workability. Examples of the inhibitor include: 1-ethynylcyclohexan-1-ol, 2-methyl-3-butyn-2-ol, 3,5-dimethyl-1-hexyn-3-ol, 2-phenyl-3-butyn-2-ol, and other acetylene compounds; 3-methyl-3-penten-1-yne, 3,5-dimethyl-3-hexen-1-yne, and other enyne compounds; benzotrizole and other triazole compounds. Although the amount of these inhibitors is not limited, it is preferably within a range of 0.001 to 10 parts by mass or 0.01 to 10 parts by mass relative to 100 parts by mass of component (A).

Metal compounds such as copper acetylacetonate and copper phthalocyanine may be added to the present composition as other optional ingredients for the purpose of improving the heat resistance, cold resistance, or weather resistance of the resulting fluorosilicone cured product. The amount of such metal compound content is not limited, but should be at most 100 ppm or at most 50 ppm by mass relative to the present composition.

Furthermore, the present composition may contain fillers to the extent that the purpose of the present invention is not impaired. Examples of filler include: reinforcing fillers such as fumed silica, fused silica, and sedimented silica; bulking fillers such as quartz powder, diatomaceous earth, calcium carbonate, magnesium carbonate; heat-resistant additives such as cerium oxide, cerium hydroxide, iron oxide; pigments such as red iron oxide, titanium oxide, carbon black; and flame retardants.

### Examples

The curable fluorosilicone composition of the present invention will now be described in detail by examples. Note that in the examples, the viscosity is the value at 25°C. The pot life of the curable fluorosilicone composition at 25°C was measured as follows.

### <Ratio of viscosity after 24 hours to initial viscosity>

The initial viscosity (mPa s) of the curable fluorosilicone composition immediately after preparation at 25°C and the viscosity (mPa s) of the curable fluorosilicone composition after standing for 24 hours at 25°C were measured, respectively, using a rotational rheometer in accordance with the method specified in JIS K7117-2:1999 (Anton Paar MCR102 or 302). For this measurement, a cone plate with a diameter of 20 mm and 2° was used, and the shear rate was set at 10.0 (S⁻¹). The ratio of the viscosity after 24 hours to the initial viscosity was determined.

### <Examples 1-4, Comparative Examples 1-8>

A curable fluorosilicone composition was prepared by uniformly mixing the following components to achieve the composition shown in Tables 1 to 3. The molar ratio of silicon atom-bonded hydrogen atoms in component (B) relative to one mole of the total aliphatic unsaturated bonds in the present composition was set at 0.8.

The following component was used as component (A).
(a-1): a methyl(3,3,3-trifluoropropyl)polysiloxane capped at both molecular chain terminals with dimethylvinylsiloxy groups and having a viscosity of 1,200 mPa·s (a content of vinyl groups = approximately 1.08 mass%)

The following components were used as component (B).
(b-1): a copolymer of dimethylsiloxane and methyl(3,3,3-trifluoropropyl)siloxane capped at both molecular chain terminals with dimethylhydrogensiloxy groups and having a kinematic viscosity of 710 mm²/s (a content of silicon atom-bonded hydrogen atoms = approximately 0.024 mass%)
(b-2): a branched-chain organopolysiloxane with a kinematic viscosity of 7 mm²/s and represented by the following formula:

   CF₃C₂H₄Si[OSi(CH₃)₂H]₃

   (a content of silicon-bonded hydrogen atoms = approximately 0.59 mass%)

The following component was used as component (C).
(c-1): a platinum complex with methyl(3,3,3-trifluoropropyl)siloxane oligomer (degree of polymerization = 3) capped at both molecular chain terminals with dimethylvinylsiloxy groups (a content of platinum metal = approximately 5,000 ppm)

The following component was used as component (D). (d-1): a silylated acetylene inhibitor represented by the following formula:

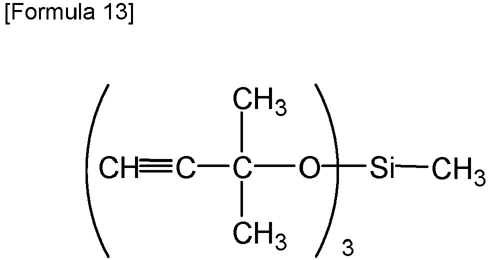

The following components were used as a comparison of component (D).
(d-2): 1-ethynyl-cyclohexan-1-ol
(d-3): 2-methyl-3-butyn-2-ol
(d-4): 1,3,5,7-tetravinyl-tetramethylcyclotetrasiloxane

**[Table 1]**

| | | | Examples | | | |
|---|---|---|---|---|---|---|
| | | | 1 | 2 | 3 | 4 |
| Composition of curable fluorosilicone composition (parts by mass) | (A) | (a-1) | 44.18 | 46.15 | 47.23 | 47.67 |
| | (B) | (b-1) | 54.90 | 53.10 | 52.10 | 51.70 |
| | | (b-2) | 0.57 | 0.54 | 0.53 | 0.53 |
| | (C) | (c-1) | 0.07 | 0.07 | 0.07 | 0.07 |
| | (D) | (d-1) | 0.29 | 0.15 | 0.07 | 0.04 |
| | | (d-2) | 0 | 0 | 0 | 0 |
| | | (d-3) | 0 | 0 | 0 | 0 |
| | | (d-4) | 0 | 0 | 0 | 0 |
| Content of platinum metals in compositions (ppm) | | | 3.8 | 3.8 | 3.8 | 3.8 |
| Moles of the aliphatic unsaturated bond in component (D) relative to the platinum metal in component (C) | | | 1551 | 771 | 384 | 192 |
| Moles of the aliphatic unsaturated bond in component (d-1) relative to the platinum metal in component (C) | | | 1551 | 771 | 384 | 192 |
| Ratio of viscosity after 24 hours to initial viscosity | | | 1.04 | 1.13 | 1.13 | 1.19 |

**[Table 2]**

| | | | Comparative Examples | | | |
|---|---|---|---|---|---|---|
| | | | 1 | 2 | 3 | 4 |
| Composition of curable fluorosilicone composition (parts by mass) | (A) | (a-1) | 46.97 | 42.81 | 47.79 | 46.94 |
| | (B) | (b-1) | 52.30 | 56.20 | 51.60 | 52.38 |
| | | (b-2) | 0.54 | 0.58 | 0.53 | 0.53 |
| | (C) | (c-1) | 0.07 | 0.07 | 0.07 | 0.07 |
| | (D) | (d-1) | 0 | 0 | 0.02 | 0 |
| | | (d-2) | 0.12 | 0 | 0 | 0 |
| | | (d-3) | 0 | 0 | 0 | 0.08 |
| | | (d-4) | 0 | 0.34 | 0 | 0 |
| Content of platinum metals in compositions (ppm) | | | 3.8 | 3.8 | 3.8 | 3.8 |
| Moles of the aliphatic unsaturated bond in component (D) relative to the platinum metal in component (C) | | | 517 | 2068 | 96 | 517 |
| Moles of the aliphatic unsaturated bond in component (d-1) relative to the platinum metal in component (C) | | | 0 | 0 | 96 | 0 |
| Ratio of viscosity after 24 hours to initial viscosity | | | 107.7 | 1.4 | 90.2 | Not measurable due to curing |

**[Table 3]**

| | | | Comparative Examples | | | |
|---|---|---|---|---|---|---|
| | | | 5 | 6 | 7 | 8 |
| Composition of curable fluorosilicone composition (parts by mass) | (A) | (a-1) | 47.36 | 47.69 | 47.45 | 47.68 |
| | (B) | (b-1) | 52.00 | 51.70 | 51.90 | 51.70 |
| | | (b-2) | 0.53 | 0.53 | 0.53 | 0.53 |
| | (C) | (c-1) | 0.07 | 0.07 | 0.07 | 0.07 |
| | (D) | (d-1) | 0 | 0 | 0 | 0 |
| | | (d-2) | 0 | 0 | 0.06 | 0.03 |
| | | (d-3) | 0.04 | 0.02 | 0 | 0 |
| | | (d-4) | 0 | 0 | 0 | 0 |
| Content of platinum metals in compositions (ppm) | | | 3.8 | 3.8 | 3.8 | 3.8 |
| Moles of the aliphatic unsaturated bond in component (D) relative to the platinum metal in component (C) | | | 258 | 129 | 258 | 129 |
| Moles of the aliphatic unsaturated bond in component (d-1) relative to the platinum metal in component (C) | | | 0 | 0 | 0 | 0 |
| Ratio of viscosity after 24 hours to initial viscosity | | | Not measurable due to curing | Not measurable due to curing | 161.2 | 183.0 |

The curable fluorosilicone compositions of Examples 1 to 4 were found to have a sufficient pot life at 25°C, although all compositions cured quickly at 150°C. On the other hand, in Comparative Examples 1 and 3 to 8, although the compositions all cured quickly at 150°C, it was found that the pot life at 25°C was not sufficient. In Comparative Example 2, although a larger amount of 1,3,5,7-tetravinyl-tetramethylcyclotetrasiloxane was blended, it was found that the pot life at 25°C was not sufficient.

### Industrial Applicability

The curable fluorosilicone composition of the present invention has favorable curability and a sufficient pot life at room temperature, and is therefore suitable, for example, as protective encapsulating materials for electrical and electronic components such as integrated circuits; shock absorbing materials; and the like.

## Claims

1. A curable fluorosilicone composition comprising:
(A) 100 parts by mass of an organopolysiloxane having at least two alkenyl groups and at least one fluoroalkyl group having 3 to 12 carbon atoms in a molecule;
(B) an organopolysiloxane having at least two silicon atom-bonded hydrogen atoms and at least one fluoroalkyl group having 3 to 12 carbon atoms in a molecule, in an amount such that the amount of silicon atom-bonded hydrogen atoms in this component is 0.1 to 10 moles relative to 1 mole of a total of aliphatic unsaturated bonds in the present composition;
(C) a platinum group metal-based catalyst for hydrosilylation reaction; and
(D) a silylated acetylene inhibitor,
wherein the amount of platinum group metals in component (C) relative to the present composition comprise is at least 0.1 to 100 ppm, in terms of mass units, and the molar ratio of the aliphatic unsaturated bonds in component (D) relative to the platinum group metals in component (C) is 100 to 2,000.

2. The curable fluorosilicone composition according to claim 1, wherein component (A) contains a straight-chain organopolysiloxane having alkenyl groups bonded only to silicon atoms capping both molecular terminals.

3. The curable fluorosilicone composition according to claim 1, wherein component (B) contains an organopolysiloxane having hydrogen atoms bonded only to silicon atoms capping both molecular terminals.

4. The curable fluorosilicone composition according to claim 1, wherein component (B) is a mixture of a straight-chain organopolysiloxane having hydrogen atoms bonded only to silicon atoms capping a molecular terminal and a branched-chain organopolysiloxane having hydrogen atoms bonded only to silicon atoms capping both molecular terminals.

5. The curable fluorosilicone composition according to claim 1, wherein component (C) is a platinum compound or a platinum complex.

6. The curable fluorosilicone composition according to claim 1, wherein component (D) is a silylated acetylene inhibitor represented by the following general formula: 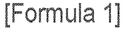 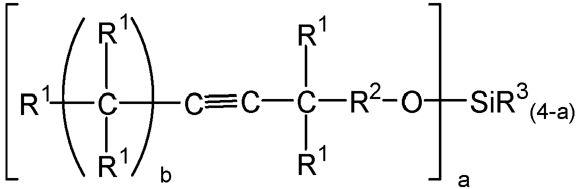
(In the formula, R¹ is a hydrogen atom or a monovalent hydrocarbon group, and may be the same or different group, R² is a linking group or an alkylene group, R³ is an alkyl group, an alkenyl group, or an aryl group, a is an integer from 1 to 4, and b is an integer from 0 to 5);
a silylated acetylene inhibitor represented by the following general formula: 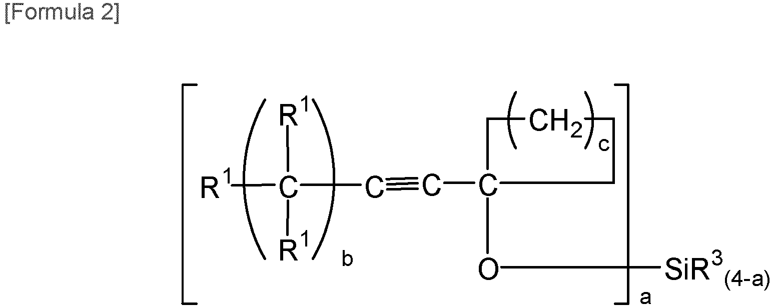
(In the formula, R¹, R³, a, and b are the same as described above, and c is an integer from 4 to 6);
or a mixture thereof.
